# EUROPÄISCHE PATENTSCHRIFT

(11) **EP 1 013 130 B1**
(45) Veröffentlichungstag und Bekanntmachung des Hinweises auf die Patenterteilung: **21.12.2005**
(21) Anmeldenummer: 98954130.5
(22) Anmeldetag: 07.09.1998
(51) Int. Cl.: H04Q 7/38

(54) **VERFAHREN ZUM SCHUTZ EINES BESCHRÄNKTEN ÖRTLICHEN BEREICHES VOR DURCH MOBILFUNKENDGERÄTE AUSGESENDETER ELEKTROMAGNETICSHER STRAHLUNG, SOWIE ENTSPRECHENDE FUNKSTATION**
METHOD FOR PROTECTING A LIMITED LOCAL AREA AGAINST ELECTROMAGNETIC RADIATION EMITTED BY MOBILE RADIOTELEPHONE TERMINALS, AND CORRESPONDING RADIO STATION
PROCEDE POUR PROTEGER UNE ZONE LOCALE LIMITEE CONTRE LE RAYONNEMENT ELECTROMAGNETIQUE EMIS PAR DES TERMINAUX RADIOTELEPHONIQUES MOBILES, ET STATION RADIO CORRESPONDANTE

(30) Priorität: 09.09.1997 DE 19739483; 26.11.1997 DE 19752405
(43) Veröffentlichungstag der Anmeldung: 28.06.2000
(73) Patentinhaber: SIEMENS AKTIENGESELLSCHAFT, 80333 München (DE)
(72) Erfinder: NEUMANN, Peter, D-81739 München (DE); SASSE, Jörg, D-80995 München (DE)
(86) Internationale Anmeldenummer: PCT/DE1998/002631
(87) Internationale Veröffentlichungsnummer: WO 1999/013673

(56) Entgegenhaltungen:
- EP-A- 0 505 106
- WO-A-97/49255
- US-A- 5 539 925

## Beschreibung

Die Erfindung bezieht sich auf ein Verfahren zum Schutz eines beschränkten örtlichen Bereiches vor elektromagnetischer Strahlung, insbesondere der beim Sendevorgang eines Mobilfunkendgerätes entstehenden elektromagnetischen Strahlung, eine Funkstation und ein Mobilfunkendgerät.

Moderne zellulare Mobilfunksysteme, wie das erfolgreiche GSM-System bestehen aus einer Vielzahl von Mobilvermittlungsstellen, die untereinander vernetzt sind, bzw. den Zugang zu einem Festnetz PSTN herstellen. Ferner sind diese Mobilvermittlungsstellen mit jeweils zumindest einem Basisstationscontroler verbunden. Jeder Basisstationscontroler ist wiederum mit zumindest einer Basisstation (Basis-Sende/Empfangsstation) verbunden. Eine solche Basisstation ist eine Funkstation, die über eine Funkschnittstelle eine Funkverbindung zu anderen Funkstationen, sog. Mobilstationen (Mobilfunkendgeräten) aufbauen kann. Im Rahmen dieser Anmeldung beinhaltet der Begriff Funkstation auch eine Basisstation bzw. eine (Mobilfunk-) Sende-/Empfangs-Einrichtung bzw. eine Basis-Sende-Empfangsstation bzw. eine zumindest teilweise nach dem Prinzip einer Basis-Sende-Empfangsstation eines oder mehrerer Mobilfunksysteme arbeitende Funkstation mit entsprechenden Sende-, Empfangs-, und Verarbeitungseinrichtungen.

Die physikalischen Übertragungsressourcen der Funkstrecke werden durch ein Vielfachzugriffsverfahren wie ein TDMA, FDMA oder ein CDMA-Verfahren nach einem festgelegten Schema logischen Mobilfunkkanälen zugeordnet. Bei den logischen Mobilfunkkanälen unterscheidet man grundsätzlich zwei Arten: Signalisierungskanäle zur Übertragung von Signalisierungsinformationen und Verkehrskanäle zur Übertragung von Nutzdaten.
Die logischen Mobilfunkkanäle können einer bestimmten Verbindung zwischen einer Basisstation und einer Mobilstation zugeteilt werden. Zwischen den Mobilstationen und der diesen Mobilstationen zugeordneten Basisstation können mittels hochfrequenter elektromagnetischer Wellen Daten übertragen werden.

Dies kann in vielen Fällen unerwünscht sein, insbesondere dann, wenn diese elektromagnetischen Wellen andere sensible elektronische Geräte stören können. So kommt es vor, daß die komplexe Elektronik moderner Flugzeuge durch die Benutzung von Mobiltelefonen durch mitfliegende Passagiere derart gestört wird, daß es zu Schwierigkeiten in der Steuerung des Flugzeuges kommt. So ist bei einigen Fluglinien die Verwendung von Mobiltelefonen verboten. Bisher werden die Passagiere durch Durchsagen auf diese Gefahren aufmerksam gemacht und aufgefordert, ihre Mobiltelefone nicht zu benützen, worauf ein manuelles Ausschalten der Mobiltelefone durch die Mobiltelefonbenutzer erfolgt. Dieses bisherige Vorgehen ist sehr aufwendig und unzuverlässig.

In der US-A-55 39 925 wird ein Verfahren zur Deaktivierung eines Mobilfunkendgerätes beschrieben, bei dem die Funkstation am Ende eines Sendeintervalls eine Nachricht an das Mobilfunkendgerät sendet, woraufhin das Mobilfunkendgerät seine nicht benötigten stromverbrauchenden Teile (z.B. das Empfangsteil) für ein bestimmtes Zeitintervall abschaltet.

Aus der WO 97/49 255 ist ein weiteres Verfahren zur Deaktivierung eines Mobilfunkendgerätes bekannt, bei dem das Mobilfunkendgerät deaktiviert wird, indem eine diesem Bereich zugeordnete Basisstation ein Deaktivierungssignal auf dem Kontrollkanal aussendet; bei Empfang dieses Signals schaltet sich das Mobilfunkendgerät entweder ab, oder es reduziert die Sendeleistung, oder es führt eine Aktualisierung seines Aufenthaltsortes mit Umleitung auf eine Sprachbox durch. Dieses Dokument wurde erst am 24. Dezember 1997 veröffentlicht.

Aus der DE-C1-197 30 595 ist ein Verfahren zur Detektion und Begrenzung von elektromagnetischen Störquellen bekannt. Veröffentlicht wurde das Dokument am 12.11.98.

Der Erfindung liegt daher die Aufgabe zugrunde, eine technische Lehre anzugeben, die auf einfache, effiziente und zuverlässige Weise den Schutz eines beschränkten örtlichen Bereiches vor elektromagnetischer Strahlung ermöglicht.

Diese Aufgabe wird durch die Merkmale der unabhängigen Patentansprüche gelöst. Weiterbildungen der Erfindung ergeben sich aus den Unteransprüchen.

Die Erfindung beruht demnach auf dem Gedanken, daß in dem zu überwachenden Bereich durch das gezielte Aussenden von Signalisierungsinformationen künstlich Verhältnisse geschaffen werden, die erzwingen, daß die zu detektierenden Mobilfunkendgeräte Signalisierungsinformationen senden, und eine Verarbeitung dieser Signalisierungsinformationen zur Detektion von nicht ausgeschalteten Mobilfunkendgeräten führt.

Sendet eine Funkstation Signalisierungsinformationen über den der Funkstation zugeordneten Aufenthaltsbereich, deren Empfang und Verarbeitung in einem Mobilfunkendgerät das Aussenden von Signalisierungsinformationen zum Zweck der Aktualisierung des Aufenthaltsbereiches erzwingt, so ist es möglich, daß nicht ausgeschaltete Mobilfunkendgeräte aktiv aufgefordert werden, Signalisierungsinformationen auszusenden, mittels derer sie leicht detektiert werden können. Dazu können schon bekannte Signalisierungsprozeduren verwendet werden.

Durch die Erfindung wird erreicht, daß einfach und zuverlässig erkannt werden kann, ob sich in einem zu überwachenden Bereich nicht ausgeschaltete Mobilfunkendgeräte befinden oder nicht, und entsprechende Maßnahmen zum Schutz eines beschränkten örtlichen Bereiches vor elektromagnetischer Strahlung durchgeführt werden können.

Es gibt auch Mobilfunkendgeräte, die auch im empfangsbereiten Zustand in bestimmten Zeitabständen Informationen mit dem Mobilfunksystem austauschen. Ausschalten bedeutet daher im Rahmen dieser Anmeldung auch, daß das Mobilfunkendgerät in einen Zustand versetzt wird, in dem es keine Signale mehr aussenden kann, die bei anderen elektronischen Geräten zu wesentlichen Störungen führen könnten.

Eine bevorzugte Ausführungsvariante sieht vor, daß nur die Mobilfunkendgeräte, die sich in einer bestimmten örtlichen Beziehung zu der Funkstation befinden, die von dieser Funkstation ausgesendeten Signalisierungsinformationen empfangen.

Dies hat den Vorteil, daß nur die Mobilfunkendgeräte detektiert werden, die sich in dem durch die Erfindung überwachten Bereich befinden.

Eine weitere vorteilhafte Ausgestaltung sieht vor, daß die Funkstation nach einer festen oder variablen Zeitspanne Signalisierungsinformationen über einen geänderten der Funkstation zugeordneten Aufenthaltsbereich aussendet.

Dadurch ist es möglich, daß auch ein einmal detektiertes und nach einem ersten Ausschalten wieder eingeschaltetes Mobilfunkendgerät Signalisierungsinformationen zur Änderung des Aufenthaltsbereiches aussendet.

Eine weitere vorteilhafte Ausgestaltung sieht vor, daß die Funkstation zumindest teilweise nach dem Prinzip von Basis-Sende-Empfangsstation unterschiedlicher Mobilfunksysteme arbeitet.

Dadurch wird erreicht, daß die Erfindung in unterschiedlichen Ländern eingesetzt werden kann und gerade in Überwachungsbereichen, die von einem internationalen Personenkreis betreten werden (Flughäfen) die Mobilfunkendgeräte aller Personen und der entsprechenden unterschiedlichen Mobilfunksysteme detektiert werden können.

Eine weitere vorteilhafte Ausgestaltung sieht vor, daß die zumindest teilweise nach dem Prinzip einer Basis-Sende-Empfangsstationen eines Mobilfunksystemes arbeitende Funkstation nicht mit Vermittlungsstellen verbunden ist.

Dadurch wird erreicht, daß die Funkstation technisch sehr einfach, billig und eventuell tragbar realisiert werden kann.

Bei einer anderen Ausgestaltung der Erfindung werden Signalisierungsinformationen von einer Funkstation über eine Luftschnittstelle ausgesendet, die von einem Mobilfunkendgerät empfangen und verarbeitet werden, und diese Verarbeitung zur Deaktivierung einer Sendefunktion des Mobilfunkendgerätes führt.

Dadurch wird erreicht, daß die Handhabung von Mobilfunkendgeräten automatisch, zuverlässig und effizient auf die Funktionen eingeschränkt wird, deren Ausführen keine störende Wirkung auf die Umgebung hat. Ein manuelles Abschalten ist nicht mehr erforderlich.

Die Erfindung wird im folgenden anhand bevorzugter Ausführungsbeispiele näher beschrieben. Zur Erläuterung der Ausführungsformen der Erfindung dienen die nachstehend aufgelisteten Figuren.

Es zeigen:
Figur 1 eine schematische Darstellung unterschiedlicher Mobilfunkendgeräte und einer Funkstation
Figur 2 eine schematische Darstellung von Mobilfunkendgeräten, einer Funkstation und der Übertragung der Signalisierungsinformationen
Figur 3 eine schematische Darstellung eines Funkgerätes

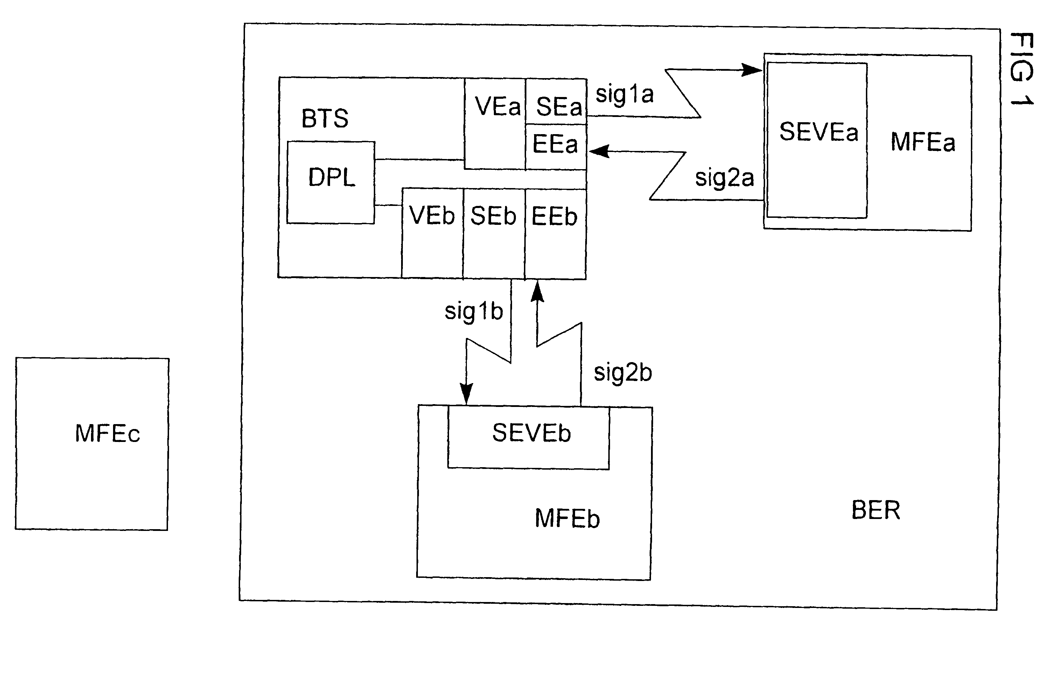

Figur 1 zeigt eine Funkstation BTS mit Sende- SE, Empfangs-EE und Verarbeitungseinrichtungen VE für unterschiedliche Mobilfunksysteme.

Diese Funkstation BTS sendet Signalisierungsinformationen sig1 aus, die von Mobilfunkendgeräten MFEa, MFEb innerhalb eines begrenzten örtlichen Bereichs BER, der sich aus der Reichweite der gesendeten Signale ergeben kann, empfangen und verarbeitet werden können.

Unter "Mobilfunkendgerät" sind dabei auch Mobiltelefone oder tragbare Computer zu verstehen, die über eine Funkschnittstelle hochfrequente elektromagnetische Wellen aussenden können und dadurch über ein Mobilfunksystem kommunizieren können.

Die Erfindung kann auch in folgenden Bereichen BER vorteilhaft Anwendung finden:
- in Flugzeugen und auf Flughäfen
- in Krankenhäusern, Arztpraxen oder medizinischen Labors
- in der Nähe von Kraftstoffdepots und Tankstellen
- in der Nähe von Chemiewerken oder bei Sprengarbeiten

Die Größe des abgedeckten Bereichs BER kann über eine Leistungsregelung der Sendesignale oder eine geeignete Antennenrealisierung, mittels derer die Signalisierungsinformationen übertragen werden, variiert und angepaßt werden.

Mobilfunkendgeräte MFEc, die sich außerhalb des Bereichs BER befinden, können die Signalisierungsinformationen nicht empfangen.

Da über die nicht mit einer Vermittlungseinrichtung eines Mobilfunksystem verbundene Funkstation BTS kein normaler Dienst, wie z.B. Telefonieren möglich sein soll, kann diese Funkstation BTS technisch einfacher realisiert sein als eine Basis-Sende-Empfangsstation, die mit einem Mobilfunksystem verbunden ist. Es kann sich also auch um eine Funkstation BTS handeln, die nur teilweise nach dem Prinzip einer Basis-Sende-Empfangsstation von Mobilfunksystemen funktioniert. Es ist auch möglich, Basis-Sende-Empfangsstationen zu verwenden, die sich nur in der Verarbeitung der Informationen von den üblicherweise verwendeten Basis-Sende-Empfangsstationen unterscheiden.

Die Signalisierungsinformationen sig1, sig2 werden dabei über die eh schon vorhandenen und bekannten Schnittstellen bzw. Mobilfunkkanäle gemäß den Standards unterschiedlicher Mobilfunksysteme übertragen.

Die Signalisierungsinformationen sig1a, sig1b werden von den Mobilfunkendgeräten MFEa, MFEb innerhalb des Bereichs BER mittels Sende-, Empfangs- und Verarbeitungseinrichtungen SE-VEa, SEVEb empfangen und weiterverarbeitet. Die Verarbeitung der Signalisierungsinformationen sig1 kann durch softwaregesteuerte Prozessoren, die in den Mobilfunkendgeräten MFE enthalten sind, durchgeführt werden. Die Weiterverarbeitung der Signalisierungsinformationen sig1 führt dazu, daß ein empfangendes Mobilfunkendgerät MFE als Antwort auf diese empfangenen Signalisierungsinformationen selbst Signalisierungsinformationen sig2 aussendet.

Der Empfang und die Verarbeitung dieser von den Mobilfunkendgeräten gesendeten Signalisierungsinformationen sig2 in der Funkstation BTS führt dazu, daß beispielsweise ein Überwachungs- oder Bedienpersonal optisch über einen Monitor DPL oder akustisch über einen Lautsprecher darüber informiert wird, daß in dem überwachten Bereich noch Mobilfunkendgeräte MFEa, MFEb angeschaltet sind. Gegebenenfalls können auch Informationen über die Anzahl der noch eingeschalteten Mobilfunkendgeräte MFEa, MFEb dargestellt werden.

Das heißt die Funkstation BTS funktioniert als Detektor, der die zu detektierenden Mobilfunkendgeräte MFEa, MFEb aktiv auffordert, ein Antwortsignal sig2 zu senden. Bei dem erfindungsgemäßen Verfahren ist es nicht nötig, auf ein Signal zu warten, das vom Mobilfunkendgerät MFE zufällig aufgrund eines ständig sich wiederholenden Vorganges zum Informationsaustausch mit der Basis-Sende-Empfangsstation oder aufgrund eines Verbindungsaufbaus ausgesendet wird. Stattdessen erzwingt das erfindungsgemäße Verfahren zu einem definierten Zeitpunkt das Aussenden von detektierbaren Signalen sig2 von allen im überwachten Bereich BER eingeschalteten Mobilfunkendgeräten MFEa, MFEb.

Bei einer vorteilhafte Ausführungsform der Erfindung wird in dem zu überwachenden geographischen Gebiet (z.B. beim Einstieg in ein Flugzeug oder in einem Flugzeug) eine Funkstation BTS installiert, die zumindest teilweise nach dem Prinzip einer Basis-Sende-Empfangsstation BTS eines oder mehrerer Mobilfunk-Standards arbeitet (z.B. GSM und/oder PCN und/oder DCS und/oder IS-95 AMPS und/oder TACS und/oder IS-54 und/oder PDC und/oder CDMA und/oder WB-CDMA und/oder TD/CDMA etc). Dazu kann die Funkstation BTS mit unterschiedlichen den jeweiligen Mobilfunksystemen entsprechenden Sende- SEa, SEb Empfangs- EEa, EEb und Verarbeitungseinrichtungen VEa, VEb versehen werden.

Eine weitere Ausgestaltung der Erfindung sieht vor, daß eine einzelne nicht mit einem Mobilfunksystem kommunizierende Funkstation BTS auf Sianalisierungskanälen wie dem BCCH (Broadcast Control Channel) des GSM-Systems seine Kennung sig1a mit einer von den benachbarten Basis-Sende-Empfangsstationen nicht verwendeten Aufenthaltskennung (Information über Aufenthaltsbereich) wie dem LAI (Location Area Identity) des GSM-Systems sendet.

Um die Mobilfunkendgeräte MFEa, MFEb im überwachten Bereich BER zu einem Wechsel (Location Update) der zugeordneten Basis-Sende-Empfangsstation bzw. der zugehörigen Aufenthaltskennung (LAI Location Area Identity) zu zwingen, sendet die Funkstation BTS Signalisierungsinformationen sig1 mit sehr guter Qualität und hoher Leistung.

Da die von der Funkstation BTS ausgesendeten Signalisierungsinformationen sig1 auch aufgrund der unmittelbaren Nähe zu den Mobilfunkendgeräten MFEa, MFEb von den Mobilfunkendgeräten MFEa, MFEb mit besserer Qualität empfangen werden können als die von eventuell benachbarten Basis-Sende-Empfangsstationen gesendeten Signale, senden die nicht ausgeschalteten Mobilfunkendgeräte MFEa, MFEb einen Meßbericht (Measurement Report), und die zu einem Wechsel (Location Update) der zugeordneten Basis-Sende-Empfangsstation bzw. der zugehörigen Aufenthaltskennung (LAI Location Area Identity) nötigen Signalisierungsinformationen sig2a zur Funkstation BTS.

Die Mobilfunkendgeräte MFEa, MFEb werden vom Mobilfunksystem abgemeldet und in der virtuellen Zelle eines virtuellen Mobilfunksystems, die der Funkstation BTS zugeordnet ist angemeldet. Durch eine derartige virtuelle Mobilfunkzelle werden auch eventuelle Sperren im Zugriff auf das echte Mobilfunksystem umgangen.

Der Empfang und die Verarbeitung der für den Location Update nötigen Signalisierungsinformationen sig2 führt in der Funkstation BTS oder in einer der Funkstation zugeordneten Ausgabeeinrichtung DPL zur Auslösung einer optischen oder akustischen Darstellung eines Warnsignals. Werden nach einem entsprechenden Hinweis des Bedienpersonals die Mobilfunkendgeräte MFEa, MFEb nicht ausgeschaltet, so kann das Verfahren nach einem Verändern des von der Funkstation BTS zu sendenden LAI (Location Area Identity) Codes wiederholt werden, und die Detektion noch nicht ausgeschalteter oder wieder angeschalteter Mobilfunkendgeräte fortgesetzt werden. Ein Fachmann kann die genaue Beschreibung und Definition der Signalisierungsproze-duren, die für einen Location Update verwendet werden, den bekannten Standardbeschreibungen der entsprechenden Mobilfunksysteme entnehmen.

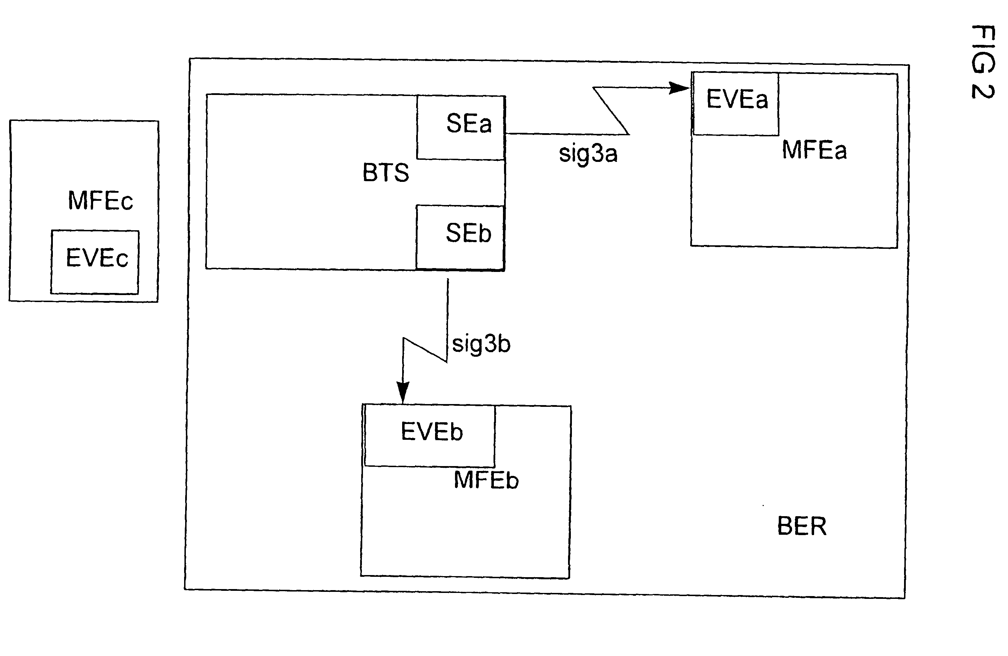

Figur 2 zeigt eine Funkstation BTS, die nach dem Empfang und der Verarbeitung der für den oben beschriebenen Location Update nötigen Signalisierungsinformationen sig2 innerhalb eines begrenzten örtlichen Bereichs BER, Signalisierungsinformationen sig3 sendet, die von Mobilfunkendgeräten MFEa,b mit entsprechenden Empfangs- und Verarbeitungseinrichtungen EVE empfangen und verarbeitet werden können.

Die Signalisierungsinformationen sig3 können dabei über die eh schon vorhandenen und bekannten Schnittstellen bzw. Mobilfunkkanäle von Mobilfunksystemen oder über eigens zu diesem Zweck vorgesehene und definierte Schnittstellen übertragen werden.

Die Signalisierungsinformationen sig3 werden von den empfangsbereiten Mobilfunkendgeräten MFEa,b innerhalb des Bereichs BER empfangen und weiterverarbeitet. Dies kann durch softwaregesteuerte Prozessoren, die eventuell eh schon vorhanden sind, durchgeführt werden.

Die Weiterverarbeitung der Informationen führt dazu, daß bestimmte Funktionen der Mobilfunkendgeräte MFEa,b deaktiviert werden. Vorteilhafterweise handelt es sich dabei um die Funktionen, die zu Störungen in der Umgebung dieser Mobilfunkendgeräte führen können. So werden je nach Grad der Störung die Sendefunktionen oder die Sende- und Empfangsfunktionen deaktiviert. Auch bei tragbaren Computern werden die Funktionen deaktiviert, deren Ausführung zur Aussendung hochfrequenter Signale oder Signale mit hoher Leistung führen. "Deaktivieren von Funktionen" bedeutet auch, daß diese Funktionen für einen festen oder variablen Zeitraum, oder solange bis das System bzw. ein anderes elektronisches Gerät oder der Benützer ein Kommando zur Aufhebung des deaktivierten Zustandes gibt, nicht mehr ausgeführt werden können. Deaktivieren einer Sendefunktion kann auch bedeuten, daß das Mobilfunkendgerät in einen Zustand versetzt wird, in dem es keine Signale mehr aussenden kann, die bei anderen elektronischen Geräten zu wesentlichen Störungen führen könnten.

Die Weiterverarbeitung der Informationen kann auch dazu führen, daß das Mobilfunkendgerät MFEa,b in einen Zustand versetzt wird, in dem diese bestimmten Funktionen deaktiviert sind, und solange sich das Mobilfunkendgerät in diesem Zustand befindet nicht mehr aktiviert werden können. Dies kann auch realisiert werden, indem die Funkstation BTS in eine Art Türrahmen, Schleuse, Schranke oder eine andere Art einer begrenzten Zutrittsmöglichkeit integriert ist und die Mobilfunkendgeräte MFE angesprochen werden, die durch diese begrenzten Zutrittsmöglichkeit bewegt werden. Eine Aktivierung der zuvor deaktivierten Funktionen erfolgt erst bei einer zweiten Bewegung des Mobilfunkendgerätes MFEa,b durch die begrenzte Zutrittsmöglichkeit.

Diese Funkstation BTS ist derart konfiguriert, daß alle in der näheren Umgebung BER vorhandenen Mobiltelefone MFEa,b diese Funkstation als zugeordnete Basis-Sende-Empfangsstation (Serving Cell) auswählen. Dazu sendet diese Funkstation BTS mit besonders hoher Leistung.

Mit einem definierten Kommando sig3 oder einer definierten Nachricht sig3 von der Funkstation BTS an die Mobiltelefone MFEa,b, die sich innerhalb des Bereichs BER befinden, werden diese zum Ausschalten gezwungen. Selbst wenn das Mobiltelefon wieder durch den Benutzer eingeschaltet wird, erfolgt per Kommando ein erneutes Ausschalten. Das Ausschalt-Kommando kann je nach Ausführung eine spezielle Nachricht oder ein spezieller Parameter/Parametersatz einer allgemeineren Nachricht (Message) sein.

Je nach zu unterstützendem Mobilfunk-Standard kann auch ausschließlich der Zugriff des Mobiltelefons auf das Kommunikationsnetz, d.h. das Senden des Mobiltelefons unterbunden werden, während der Empfang (z.B. von Broadcast-Nachrichten) weiterhin zulässig ist.

Das vorhandene Mobilfunk-System bzw. das Kommunikationsprotokoll kann dazu um ein entsprechendes Ausschalt-Kommando erweitert werden. Es ist auch möglich, daß nur die Mobiltelefone bzw. deren Steuersoftware derart erweitert werden, daß die Verarbeitung des Ausschalt-Kommandos zur Deaktivierung der entsprechenden Funktionen führt.

Eine weitere Möglichkeit zur Durchführung des erfindungsgemäßen Verfahrens besteht darin, daß nach einer ersten Signalisierungsphase mit dem Zweck eines Verbindungsaufbaus die Funkstation BTS Signalisierungsinformationen sig3 sendet, deren Verarbeitung im Mobilfunkendgerät MFEa,b zur Deaktivierung der Sendefunktion führt.

Um eine Verbindung in Mobilfunksystemen aufzubauen, läuft üblicherweise folgende Signalisierunsphase ab:
- das Mobilfunkendgerät MFEa,b sendet ein Channel-Request-Signal an die Funkstation BTS
- die Funkstation BTS sendet ein Immediate-Assignment-Signal an das Mobilfunkendgerät MFEa,b
- das Mobilfunkendgerät MFEa,b sendet ein Location-Updating-Request-Signal an die Funkstation BTS

Nun erfolgt ein weiterer Schritt:
- die Funkstation BTS sendet ein Ausschalt-Kommando (sig3) an das Mobilfunkendgerät (MFEa,b)

Die Verarbeitung dieses Ausschalt-Kommandos sig3 führt im Mobilfunkendgerät MFEa,b zur Deaktivierung bestimmter Funktionen, wie der Sendefunktion.

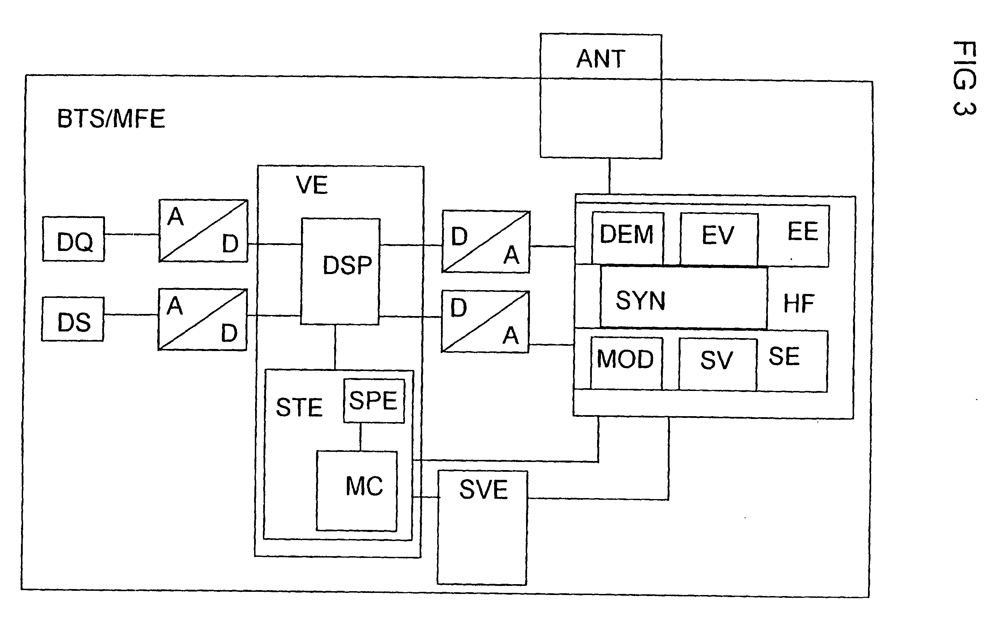

Figur 3 zeigt ein Funkgerät, das eine Funkstation BTS oder eine Mobilstation MFEa,b sein kann. Es besteht im Falle eines Mobilfunkendgerätes MFE aus einem Mikrofon und einem Lautsprecherelement. Im Falle einer Funkstation BTS, die mit keiner Vermittlungsstelle in Verbindung steht fehlen diese Elemente; gegebenenfalls ist die Funkstation BTS dagegen mit einem Display zur Darstellung der Detektionsergebnisse versehen.

Außerdem ist eine Verarbeitungseinrichtung VE, die auch eine Steuereinrichtung STE umfassen kann oder separat davon gebildet sein kann, eine Stromversorgungseinrichtung SVE, eine Hochfrequenzeinrichtung HF bestehend aus einer Empfangseinrichtung EE, einer Sendeeinrichtung SE und einem Frequenzsychesizer SYN und eine Antenneneinrichtung ANT vorgesehen. Die einzelnen Elemente des Funkgerätes sind auch durch Leiterbahnen oder Bussysteme miteinander verbunden.

Die Steuereinrichtung STE besteht im wesentlichen aus einer porgammgesteuerten Prozessoreinrichtung, wie einem Mikrocontroler MC und die Verarbeitungseinrichtung VE aus einem digitalen Signalprozessor DSP, wobei beide schreibend und lesend auf Speicherbausteine SPE zugreifen können. Der Mikrocontroler MC steuert und kontrolliert alle wesentlichen Elemente und Funktionen des Funkgerätes und steuert den Kommunikations- und Signalisierungsablauf, das An- und Abschalten bzw. Aktivieren und Deaktivieren bestimmter Komponenten oder Funktionen des Funkgerätes, das Schalten des Funkgerätes in bestimmte Betriebszustände, und die Erkennung bzw. Bestimmung der Übertragungsverhältnisse der Verbindungen zwischen Mobilstation und Basisstation.

In den flüchtigen oder nicht flüchtigen Speicherbausteinen SPE sind die Programmdaten, die zur Steuerung des Funkgerätes und des Kommunikationsablaufs insbesondere auch der Signalisierungsprozeduren benötigt werden, Geräteinformationen, vom Nutzer eingegebene Informationen, während der Verarbeitung von Signalen entstehende Informationen gespeichert und insbesondere auch Empfangsleistungsschwellwerte zur Erkennung außergewöhnlicher Ubertragungsverhältnisse abgespeichert.

Der digitale Signalprozessor DSP ist für die Sprach- und Kanalcodierung der zu übertragenden bzw. der empfangenen Daten zuständig.

Durch Analogdigitalwandler A/D werden die analogen Audiosignale und die analogen von der Hochfrequenzeinrichtung HF stammenden Signale in digitale Signale gewandelt und vom digitalen Signalprozessor DSP verarbeitet. Zu übertragende Daten werden gegebenenfalls durch einen verbindungsspezifischen Spreizcode gespreizt, durch einen Modulator MOD moduliert, durch einen Sendeleistungsverstärker SV verstärkt und schließlich mit der entsprechenden Sendeleistung über die Antenne ANT abgestrahlt. Empfangsseitig werden die Funksignale durch die Antenne ANT mit einer Empfangsleistung empfangen, durch einen Empfangsverstärker EV verstärkt, durch einen Demodulator DEM demoduliert, gegebenenfalls entspreizt und schließlich durch die Verarbeitungseinrichtung VE detektiert.

Der Fachmann kann aus der vorliegenden Beschreibung leicht weitere Kombinationen der oben beschriebenen Ausführungsbeispiele, insbesondere Funkstationen BTS, die gemäß den Mobilfunkstandards unterschiedlicher Mobilfunksysteme kommunizieren können realisieren.

## Patentansprüche

1. Verfahren zum Schutz eines beschränkten örtlichen Bereiches vor durch Mobilfunkendgeräte (MFE) ausgesendeter elektromagnetischer Strahlung, bei dem
a) eine Sendeeinrichtung (SEa) erste Signalisierungsinformationen (sig1a) über einen der Sendeeinrichtung (SEa) zugeordneten Aufenthaltsbereich aussendet,
b) deren Empfang und Verarbeitung in einem Mobilfunkendgerät (MFEa) zum Aussenden von zweiten Signalisierungsinformationen (sig2a) zum Zweck der Aktualisierung des Aufenthaltsbereiches des Mobilfunkendgerätes (MFE)führt,
c) diese zweiten Signalisierungsinformationen (sig2a) von einer Empfangseinrichtung (EEa) empfangen werden, und
d) die Verarbeitung dieser zweiten Signalisierungsinformationen (sig2a) zur Detektion von nicht ausgeschalteten Mobilfunkendgeräten (MFEa) führt.

2. Verfahren nach Anspruch 1, bei dem
die Verarbeitung dieser zweiten Signalisierungsinformationen (sig2a) zur Darstellung von Informationen über nicht ausgeschaltete Mobilfunkendgeräte führt.

3. Verfahren nach einem der vorhergehenden Ansprüche, bei dem die Sendeeinrichtung (SEa, SEb) mehrere verschiedene unterschiedlichen Mobilfunksystemen entsprechende Signalisierungsinformationen (sig1a, sig1b) aussendet und die Empfangseinrichtung (EEa, EEb) mehrere verschiedene unterschiedlichen Mobilfunksystemen entsprechende Signalisierungsinformationen (sig2a, sig2b) empfangen kann.

4. Verfahren nach einem der vorhergehenden Ansprüche, bei dem die Sendeeinrichtung (SEa) nach einer festen oder variablen Zeitspanne Signalisierungsinformationen (sig1a) über einen geänderten der Sendeeinrichtung (SEa) zugeordneten Aufenthaltsbereich aussendet.

5. Verfahren nach einem der vorhergehenden Ansprüche, bei dem die Sendeeinrichtung (SEa) und/oder die Empfangseinrichtung (EEa) nicht mit Vermittlungsstellen in Verbindung steht.

6. Verfahren nach einem der vorhergehenden Ansprüche, bei dem die Sendeeinrichtung (SEa) und die Empfangseinrichtung (EEa) in einer zumindest teilweise nach dem Prinzip unterschiedlicher Mobilfunksysteme arbeitenden Basis-Sende-Empfangsstation (BTS) integriert sind.

7. Verfahren nach einem der vorhergehenden Ansprüche, bei dem nur die Mobilfunkendgeräte (MFEa), die sich in einer bestimmten örtlichen Beziehung zu der Sendeeinrichtung (SEa) befinden, die von dieser Sendeeinrichtung (SEa) ausgesendeten Signalisierungsinformationen (sig1a) empfangen.

8. Verfahren nach einem der vorhergehenden Ansprüche, bei dem
a) die Verarbeitung der zweiten Signalisierungsinformationen (sig2a) zur Aussendung dritter Signalisierungsinformationen (sig3a) über eine Funkschnittstelle nach dem Prinzip eines Mobilfunkkanals führt,
b) diese dritten Signalisierungsinformationen (sig3a) von einem Mobilfunkendgerät empfangen und mittels programmgesteuerter Prozessoreinrichtungen verarbeitet werden, und
c) diese Verarbeitung zur Deaktivierung zumindest einer Sendefunktion des Mobilfunkendgerätes (MFEa) führt.

9. Verfahren nach einem der vorhergehenden Ansprüche, bei dem die Signalisierungsinformationen (sig3a) zur Deaktivierung einer Sendefunktion nach einer ersten Signalisierungsphase mit dem Zweck eines Verbindungsaufbaus gesendet werden.

10. Verfahren nach einem der vorhergehenden Ansprüche, bei dem
die Verarbeitung der Signalisierungsinformationen das Mobilfunkendgerät (MFEa) in einen Zustand versetzen, in dem zumindest eine Sendefunktion deaktiviert ist, und solange sich das Mobilfunkendgerät (MFEa) in diesem Zustand befindet nicht mehr aktiviert werden kann.

11. Funkstation (BTS) mit
a) Mitteln zum Senden (SEa) von ersten Signalisierungsinformationen (sig1a) über einen Aufenthaltsbereich, die nicht gleichzeitig von einer benachbarten Basis-Sende-Empfangsstation ausgesendet werden, deren Empfang und Verarbeitung in einem Mobilfunkendgerät (MFEa) zum Aussenden von zweiten Signalisierungsinformationen (sig2a) führt,
b) Mitteln zum Empfang (EEa) von Signalisierungsinformationen (sig2a), die von Mobilfunkendgeräten (MFEa) zum Zweck der Aktualisierung des Aufenthaltsbereiches gesendet werden,
c) Mitteln zur Verarbeitung (VEa) dieser Signalisierungsinformationen (sig2a), und
d) Mitteln zur Darstellung (DPL) von Informationen über nicht ausgeschaltete Mobilfunkendgeräte.

12. Funkstation (BTS) nach Anspruch 11, mit
Mitteln zum Senden (SEa) von nach einer festen oder variablen Zeitspanne sich ändernden Signalisierungsinformationen (sig1a) über einen Aufenthaltsbereich.

13. Funkstation (BTS) nach einem der Ansprüche 11 bis 12, die nicht mit Vermittlungsstellen in Verbindung steht.

14. Funkstation (BTS) nach einem der Ansprüche 11 bis 13 mit Mitteln zum Senden (SEa, SEb), Empfangen (EEa, EEb) und Verarbeiten (VEa, VEb) von Signalisierungsinformationen (sig1a, sig1b, sig2a, sig2b) unterschiedlicher Mobilfunksysteme.

## Claims

1. Method for protecting a limited local area against electromagnetic radiation emitted by mobile radio terminals (MFE), wherein
a) a transmitting device (SEa) transmits first signalling information (sig1a) relating to a location area associated with said transmitting device (SEa),
b) the reception and processing of said information in a mobile radio terminal (MFEa) leads to the transmission of second signalling information (sig2a) for the purpose of updating the location area of the mobile radio terminal (MFEa)
c) said second signalling information (sig2a) is received by a receiving device (EEa), and
d) the processing of said second signalling information (sig2a) leads to the detection of mobile radio terminals (MFEa) that are not switched off.

2. Method according to claim 1, wherein
the processing of said second signalling information (sig2a) leads to the display of information relating to mobile radio terminals that are not switched off.

3. Method according to one of the preceding claims, wherein the transmitting device (SEa, SEb) transmits a plurality of different items of signalling information (sig1a, sig1b) corresponding to different mobile radio systems and the receiving device (EEa, EEb) is able to receive a plurality of different items of signalling information (sig2a, sig2b) corresponding to different mobile radio systems.

4. Method according to one of the preceding claims, wherein the transmitting device (SEa) transmits signalling information (sig1a) relating to a change in the location area associated with said transmitting device (SEa) after a fixed or variable period of time has elapsed.

5. The method according to one of the preceding claims, wherein the transmitting device (SEa) and/or the receiving device (EEa) are/is not connected to switching centres.

6. Method according to one of the preceding claims, wherein the transmitting device (SEa) and the receiving device (EEa) are integrated in a base transmitting/receiving station (BTS) operating at least in part according to the principle of different mobile radio systems.

7. Method according to one of the preceding claims, wherein only those mobile radio terminals (MFEa) having a specific local relationship with the transmitting device (SEa) receive the signalling information (sig1a) transmitted by said transmitting device (SEa).

8. Method according to one of the preceding claims, wherein
a) the processing of the second signalling information (sig2a) leads to the transmission of third signalling information (sig3a) via a radio interface according to the principle of a mobile radio channel,
b) said third signalling information (sig3a) is received by a mobile radio terminal and processed by means of programmable processor devices, and
c) said processing leads to the deactivation of at least one transmission function of the mobile radio terminal (MFEa).

9. Method according to one of the preceding claims, wherein the signalling information (sig3a) for deactivating a transmission function is transmitted after a first signalling phase with the purpose of setting up a connection.

10. Method according to one of the preceding claims, wherein the processing of the signalling information places the mobile radio terminal (MFEa) into a state in which at least one transmission function is deactivated and said mobile radio terminal (MFEa) can henceforth not be activated as long as it remains in said state.

11. Radio station (BTS) having
a) means for transmitting (SEa) first signalling information (sig1a) relating to a location area, which signalling information (sig1a) is not transmitted simultaneously by an adjacent base transmitting/receiving station, the reception and processing of said signalling information (sig1a) in a mobile radio terminal (MFEa) leading to the transmission of second signalling information (sig2a),
b) means for receiving (EEa) second signalling information (sig2a) transmitted by mobile radio terminals (MFEa) for the purpose of updating the location area,
c) means for processing (VEa) said signalling information (sig2a), and
d) means for displaying (DPL) information relating to mobile radio terminals that are not switched off.

12. Radio station (BTS) according to claim 11, having
means for transmitting (SEa) signalling information (sig1a) relating to a location area, which signalling information (sig1a) changes after a fixed or variable period of time has elapsed.

13. Radio station (BTS) according to one of the claims 11 to 12, which is not connected to switching centres.

14. Radio station (BTS) according to one of the claims 11 to 13, having means for transmitting (SEa, SEb), receiving (EEa, EEb) and processing (VEa, VEb) signalling information (sig1a, sig1b, sig2a, sig2b) of different mobile radio systems.

## Revendications

1. Procédé pour protéger une zone locale limitée contre un rayonnement électromagnétique émis par des terminaux radio mobiles (MFE), dans lequel
a) un dispositif d'émission (SEa) émet des premières informations de signalisation (sig1a) sur une zone de localisation affectée au dispositif d'émission (SEa),
b) la réception et le traitement de celles-ci dans un terminal radio mobile (MFEa) entraîne l'émission de deuxièmes informations de signalisation (sig2a) aux fins de l'actualisation de la zone de localisation du terminal radio mobile (MFE),
c) ces deuxièmes informations de signalisation (sig2a) sont reçues par un dispositif de réception (EEa) et
d) le traitement de ces deuxièmes informations de signalisation (sig2a) entraîne la détection de terminaux radio mobiles (MFEa) non coupés.

2. Procédé selon la revendication 1, dans lequel
le traitement de ces deuxièmes informations de signalisation (sig2a) entraîne la représentation d'informations concernant des terminaux radio mobiles non coupés.

3. Procédé selon l'une des revendications précédentes, dans lequel
le dispositif d'émission (SEa, SEb) émet plusieurs informations de signalisation (sig1a, sig1b) différentes correspondant à différents systèmes radio mobiles et le dispositif de réception (EEa, EEb) peut recevoir plusieurs informations de signalisation (sig2a, sig2b) différentes correspondant à différents systèmes radio mobiles.

4. Procédé selon l'une des revendications précédentes, dans lequel le dispositif d'émission (SEa) émet, suivant une durée fixe ou variable, des informations de signalisation (sig1a) sur une zone de localisation modifiée affectée au dispositif d'émission (SEa).

5. Procédé selon l'une des revendications précédentes, dans lequel
le dispositif d'émission (SEa) et/ou le dispositif de réception (EEa) ne sont pas reliés à des centres de commutation.

6. Procédé selon l'une des revendications précédentes, dans lequel
le dispositif d'émission (SEa) et le dispositif de réception (EEa) sont intégrés dans une station émettrice / réceptrice de base (BTS) opérant du moins en partie selon le principe de différents systèmes radio mobiles.

7. Procédé selon l'une des revendications précédentes, dans lequel
les terminaux radio mobiles (MFEa) qui se trouvent dans une relation locale déterminée par rapport au dispositif d'émission (SEa) reçoivent les informations de signalisation (sig1a) émises par ce dispositif d'émission (SEa).

8. Procédé selon l'une des revendications précédentes, dans lequel
a) le traitement des deuxièmes informations de signalisation (sig2a) entraîne l'émission de troisièmes informations de signalisation (sig3a) par l'intermédiaire d'une interface radio selon le principe d'un canal radio mobile,
b) ces troisièmes informations de signalisation (sig3a) sont reçues par un terminal radio mobile et traitées au moyen de dispositifs processeurs commandés par programme et
c) ce traitement entraîne la désactivation d'au moins une fonction d'émission du terminal radio mobile (MFEa).

9. Procédé selon l'une des revendications précédentes, dans lequel
les informations de signalisation (sig3a) pour la désactivation d'une fonction d'émission sont émises au bout d'une première phase de signalisation aux fins d'un établissement de connexion.

10. Procédé selon l'une des revendications précédentes, dans lequel
le traitement des informations de signalisation met le terminal radio mobile (MFEa) dans un état dans lequel au moins une fonction d'émission est désactivée et ne peut plus être activée aussi longtemps que le terminal radio mobile (MFEa) se trouve dans cet état.

11. Station radio (BTS) avec
a) des moyens pour émettre (SEa) des premières informations de signalisation (sig1a) sur une zone de localisation, lesquelles ne sont pas en même temps émises par une station émettrice / réceptrice de base voisine et dont la réception et le traitement dans un terminal radio mobile (MFEa) entraîne l'émission de deuxièmes informations de signalisation (sig2a),
b) des moyens pour recevoir (EEa) des informations de signalisation (sig2a) qui sont émises par des terminaux radio mobiles (MFEa) aux fins de l'actualisation de la zone de localisation,
c) des moyens pour traiter (VEa) ces informations de signalisation (sig2a) et
d) des moyens pour représenter (DPL) des informations sur des terminaux radio mobiles non coupés.

12. Station radio (BTS) selon la revendication 11, comprenant des moyens pour émettre (SEa) des informations de signalisation (sig1a) sur une zone de localisation, lesquelles se modifient suivant une durée fixe ou variable.

13. Station radio (BTS) selon l'une des revendications 11 à 12, laquelle n'est pas reliée à des centres de commutation.

14. Station radio (BTS) selon l'une des revendications 11 à 13, comprenant des moyens pour émettre (SEa, SEb), recevoir (EEa, EEb) et traiter (VEa, VEb) des informations de signalisation (sig1a, sig1b, sig2a, sig2b) de différents systèmes radio mobiles.
